Europäisches Patentamt

European Patent Office

Office européen des brevets

(11) Veröffentlichungsnummer : **0 189 128**
**B1**

(12) **EUROPÄISCHE PATENTSCHRIFT**

(45) Veröffentlichungstag der Patentschrift :
04.05.88

(51) Int. Cl.⁴ : **B 29 B 13/02,** H 01 B 1/00,
**B 29 C 43/02**

(21) Anmeldenummer : **86100540.3**

(22) Anmeldetag : **17.01.86**

(54) Verfahren zur Herstellung geformter Artikel aus leitfähigen Thermoplasten und deren Verwendung in der Elektroindustrie.

(30) Priorität : 23.01.85 DE 3502077

(43) Veröffentlichungstag der Anmeldung :
30.07.86 Patentblatt 86/31

(45) Bekanntmachung des Hinweises auf die Patenterteilung : 04.05.88 Patentblatt 88/18

(84) Benannte Vertragsstaaten :
AT BE DE FR GB IT NL

(56) Entgegenhaltungen :
EP-B- 0 013 753
EP-B- 0 013 872
GB-A- 1 447 304
US-A- 4 045 403
US-A- 4 472 295

(73) Patentinhaber : BASF Aktiengesellschaft
Carl-Bosch-Strasse 38
D-6700 Ludwigshafen (DE)

(72) Erfinder : Seiler, Erhard, Dr.
Erpolzheimer Strasse 1
D-6700 Ludwigshafen (DE)
Erfinder : Welz, Martin
Kaiserslauterer Strasse 231
D-6702 Bad Duerkheim (DE)
Erfinder : Theysohn, Rainer, Dr.
Am Bruch 38
D-6710 Frankenthal (DE)
Erfinder : Giesen, Klaus
Steinbrink 35
D-2845 Damme (DE)
Erfinder : Schlag, Johannes, Dr.
Leuschnerstrasse 36
D-6700 Ludwigshafen (DE)

EP 0 189 128 B1

## Beschreibung

Die Erfindung betrifft ein Verfahren zum Verformen kleinteiliger Thermoplastteilchen, die an der Außenschicht leitfähige Additive in hochangereicherter Form enthalten, im Inneren aber aus möglichst additivfreiem Thermoplast bestehen unter weitgehender Beibehaltung der inhomogenen Struktur aus additivfreier und additiventhaltender Thermoplastanordnung zu Formteilen mit elektrischen Leitfähigkeiten von mindestens 0,001 S/cm.

Bei derartigen Formteilen soll es sich um kompliziert verformte Fertigteile handeln, die wegen ihrer relativ hohen elektrischen Leitfähigkeit in der Elektroindustrie z.B. als Stromträger oder als Heizflächenelement oder zur Ableitung elektrischer Ladungen Verwendung finden können.

Aus der Literaturstelle EP-B1-13 753 ist es bereits bekannt, elektrisch leitende Polyolefinformkörper durch Verformen kleinteiliger Polyolefinteilchen, die an der Außenschicht leitfähige Additive in hochangereicherter Form enthalten, im Inneren aber aus möglichst additivfreiem Thermoplast bestehen unter Beibehaltung der inhomogenen Struktur herzustellen. Bei diesem bekannten Verfahren werden aus den kleinteiligen Polyolefinteilchen im kontinuierlichen oder diskontinuierlichen Preßverfahren bei möglichst geringer Scherung elektrisch leitende Halbzeugplatten hergestellt. Das erhaltene elektrisch leitende Halbzeug kann einer nachträglichen Formgebung z.B. durch Tiefziehen unterworfen werden, wobei kein Fließen stattfinden soll und auftretende Scherkräfte möglichst klein gehalten werden sollen. Ein analoges Verfahren ist auch in der Druckschrift EP-B1-13 872 beschrieben. Als leitfähiges Additiv wird bei diesem bekannten Verfahren Leitfähigkeitsruß verwendet, die hergestellten kleinteiligen Polyolefinteilchen können nach üblichen Spritzguß-, Extrusions- und Hohlkörperblasverfahren zu Formkörpern mit einem Oberflächenwiderstand von $< 10^{10}$ Ohm verarbeitet werden.

Die Herstellung von elektrisch leitenden Formkörpern aus kleinteiligen Thermoplastteilchen, die im Inneren gleichmäßig verteilt ein elektrisch leitendes Additiv wie Ruß sowie oberflächlich einen dünnen Belag einer ebenfalls elektrisch leitenden, feinverteilten Substanz, vorzugsweise Silberpulver, enthalten, ist in der Literaturstelle US-A-3 003 975 beschrieben. Bei diesem Verfahren werden die kleinteiligen Thermoplastteilchen nach üblichen Verfahren verformt.

In der Vorveröffentlichung JP-A2-56/144 771 (vgl. Derwent Abstracts 1/4 137 D/51) ist ein Verfahren zur Herstellung elektrisch leitfähiger Thermoplastformkörper beschrieben, bei dem auf die Oberfläche des Formkörpers eine Schicht aus kleinteiligen Thermoplastteilchen, die an der Oberfläche leitfähige Additive enthalten, aufgebracht wird.

Aus der Schrift JP-A2-58/075 706 (vgl. Derwent Abstracts 83-767 153/38) schließlich ist ein leitfähiger Thermoplastformkörper bekannt, der aus einer Polyolefinmatrix besteht, in der gleichmäßig Teilchen aus mit nichtleitendem Füllstoff gefülltem Polyethylen vorhanden sind, die an der Oberfläche mit leitfähigen Additiven wie Leitfähigkeitsruß versehen sind. Diese bekannten Formkörper mit elektrischer Leitfähigkeit werden nach üblichen Verfahren wie Extrusion hergestellt.

Nachteilig bei den üblichen Techniken der Extrusion und des Spritzgießens von Thermoplastteilchen, die an der Außenschicht leitfähige Additive enthalten, ist die Tatsache, daß die Leitfähigkeit der erhaltenen Halbzeuge und Fertigteile stark erniedrigt ist. Das in den Literaturstellen EP-B1-13 753 und EP-B1-13 877 beschriebene Preßverfahren weist zudem starke Einschränkungen hinsichtlich der Formgebung auf, da so keine komplizierten Fertigteile mit hoher elektrischer Leitfähigkeit zu erhalten sind.

Aufgabe der Erfindung war es daher, Preßverfahren zu finden, welche die Formgebung zu komplizierten Fertigteilen erlauben, die gleichzeitig eine hohe Leitfähigkeit bei niederer Konzentration an leitfähigen Additiven aufweisen.

Diese Aufgabe wurde durch das Verfahren gemäß Patentanspruch 1 gelöst. Vorteilhafte Weiterbildungen dieses Verfahrens beschreibene die Patentansprüche 2 bis 4.

Unter kleinteiligen Thermoplastteilchen, die an der Außenschicht leitfähige Additive in hochangereicherter Form enthalten, im Inneren aber aus möglichst additivfreien Thermoplast bestehen, soll es sich um die in den Druckschriften EP-B1-13 753 und EP-B1-13 872 beschriebenen Teilchen mit mittleren Korngrößen von 10 bis 5 000 µm handeln. Als Thermoplast sind alle Kunststoffe mit thermoplastischen Eigenschaften brauchbar, insbesondere geeignet sind aber die Polyolefine, bevorzugt das Polyethylen hoher Dichte im Dichtebereich von 0,935 bis 0,965 g/cm³ und übliches Polypropylen. Die Thermoplaste sollten bevorzugt eine Grenzviskosität, gemessen nach DIN 53 728 in Decalin bei 135 °C, im Bereich von 0,5 bis 15 haben. Besonders bevorzugt sind Thermoplastteilchen aus einem Polyethylen der Dichte 0,94 bis 0,96 g/cm³ und des Schmelzindex 0,5 bis 20 g/10 min, gemessen bei 190 °C und 21,6 kg nach DIN 53 735, die in Grießform mit einer mittleren Korngröße von 100 bis 1 000 µm vorliegen und die eine mit leitfähigen Additiv gefüllte Außenschichtdicke von 5 bis 20 µm aufweisen.

Als leitfähige Additive kommen insbesondere geperlter oder pulverförmiger Leitfähigkeitsruß, Aluminiumpulver, -flocken oder -fasern, Eisenpulver, Kupferpulver, Kohlefasern, aluminisierte Glasfasern, vernickelte Glas- oder Kohlefasern etc. in Frage. Die Herstellung der Compounds nach der Prallsintertechnik ist bekannt, so daß sich eine eingehende Beschreibung erübrigt.

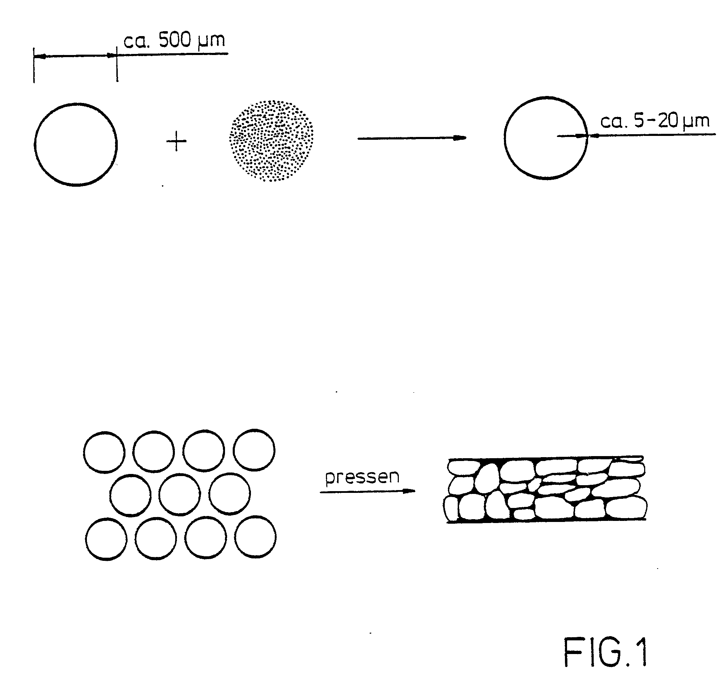

Die durch Verformung der Thermoplastteilchen hergestellten Formteile sollen eine weitgehend inhomogene Struktur aus additivfreier und additiventhaltender Thermoplastanordnung aufweisen. Derartige Strukturen sind nach bekannten Verfahren so erhalten worden, daß man Teilchen, deren Thermoplastkern nahezu frei von Additiv ist, während in der Außenschicht (Mantel) eine hohe Konzentration an Additiv herrscht, bei hohen Drücken und weitgehender Vermeidung von Scherung zu Platten verpreßt (vgl. EP-B1-13 753). Beim nachträglichen Verformen der Halbzeugplatten durch Umformen sind die auftretenden Scherkräfte klein zu halten. In Fig. 1 ist der Vorgang des Verpressens zu Formkörpern unter weitgehender Beibehaltung der inhomogenen Struktur der Teilchen schematisch dargestellt. Die elektrische Leitfähigkeit der erhaltenen Formteile größer als 0,001 S/cm (entsprechend einem Durchgangswiderstand kleiner als $10^3$ cm), insbesondere im Bereich von 0,05 bis 5 S/cm liegen.

Im Gegensatz zu dem aus der Druckschrift EP-B1-13 735 bekannten Verfahren wird bei dem erfindungsgemäßen Verfahren der Compound aus kleinteiligen Thermoplastteilchen und Additiv ohne Anwendung von Druck voll durchgeschmolzen und als Schmelze bewegt. Hierzu werden die Thermoplastteilchen ohne Anwendung von Druck bis zum Schmelzen des Thermoplasten aufgeheizt und es wird die resultierende Schmelze mit einer Fließgeschwindigkeit von 5 bis 150, bevorzugt 10 bis 100 m/Stunde bei niedriger Schergeschwindigkeit unter Druck, bevorzugt von 50 bis 300 bar, in einem Formgebungselement bewegt.

Bevorzugt ist ein Verformungsverfahren, bei dem die über den Schmelzpunkt des Thermoplasten aufgeheizten Thermoplastteilchen in einer Form durch freies Fließen zum Formteil verformt werden. Hierzu kann die Aufheizung der Teilchen innerhalb oder außerhalb einer Preßform erfolgen, durch Schließen der Preßform füllt die Kunststoffmasse anschließend die Form völlig aus. Derartige Verformungsverfahren sind allgemein bekannt, so daß sie an dieser Stelle nicht ausführlich beschrieben werden müssen (vgl. Kunststoff-Taschenbuch, 22. Ausgabe, Kapitel 3.3.5-3.3.8, Carl-Hanser-Verlag, München, Wien, 1983). Besonders wirtschaftlich ist dabei das Verfahren, bei dem die Thermoplastteilchen außerhalb der Form auf eine Temperatur oberhalb des Schmelzbereichs erwärmt und dann in eine Preßform gegeben werden, die auf eine Temperatur unterhalb des Schmelzbereiches temperiert wird. Das Formteil ist dann nach kurzer Zeit erstarrt und kann entformt werden.

Bevorzugt ist auch ein Verfahren, bei dem die Teilchen zunächst nach dem in der EP-B1-13 753 beschriebenen Verfahren zu einer Platte gepreßt werden, wobei die Kern/Mantelstruktur der Thermoplastteilchen weitgehend erhalten bleibt (vgl. Fig. 1). Anschließend wird die Platte über den Schmelzpunkt des Thermoplasten außerhalb einer Preßform erhitzt, und anschließend in einer Preßform unter Fließen der Schmelze verpreßt, wobei der Thermoplast durch Fließen die Form völlig ausfüllt. Bei dieser sog. Fließpreßtechnik wird das thermoplastische Plattenmaterial in mechanischen oder hydraulischen Pressen zu komplizierten Formteilen verpreßt (vgl. H. Schaab und K. Stoeckhert, Kunststoff-Maschinen-Führer, Carl-Hanser-Verlag 1979, Seiten 449 bis 459 und Technische Rundschau (Bern), 73, [1981], [23], Seiten 33 bis 35).

Bei allen Verfahren wird die Verformung unter Druck, bevorzugt bei einem Druck zwischen 50 und 300 bar, vorgenommen.

Das Aufheizen der mit leitfähigen Additiven an der Oberfläche versehenen Thermoplastteilchen (Compound) erfolgt wirksam und schnell durch Aufheizverfahren mittels Strahlung z.B. im UHF/HF-Feld mit Heißluft oder durch elektrische Aufheizung des elektrisch leitfähigen Compounds. Solche Verfahren sind bekannt und beispielsweise von H. Reichstein in der Literaturstelle « Kunststoffe », 74 (1984), (1), Seiten 25 bis 27 zusammenfassend beschrieben. Es können aber auch andere übliche Aufheiztechniken, außer der Wärmeeinbringung durch Reibung angewendet werden. Da die reine Wärmeleitung aber der die Verarbeitungsgeschwindigkeit begrenzende Faktor ist, sind die Aufheizverfahren mittels Strahlung bevorzugt.

Die nach dem Aufschmelzen des Thermoplasten erhaltene Masse wird unter der Einwirkung von Druck, mit einer Fließgeschwindigkeit von 5 bis 150, bevorzugt 10 bis 100 m/Stunde in einem Formgebungswerkzeug, z.B. zweiteiligen Preßwerkzeugen bewegt. Bei dieser Förderungsbewegung soll die Schergeschwindigkeit gering sein. Auf diese Weise wird Turbulenz in der Bewegung vermieden, die Strömung der Schmelze ist weitgehend laminar. Bevorzugt ist beim Fördern der Schmelze der Druck 50 bis 300 bar, und es ist die Schergeschwindigkeit kleiner als 100 $sec^{-1}$, bevorzugt im Bereich von 5 bis 50 $sec^{-1}$.

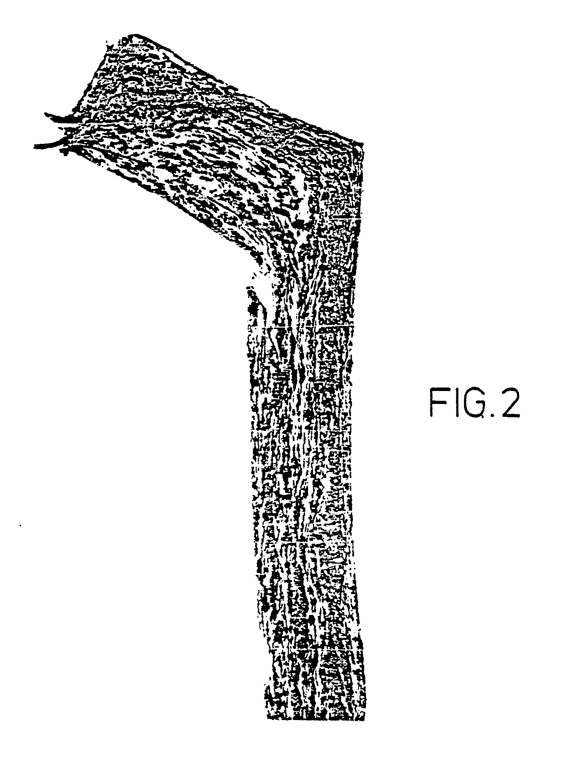

Die mit der Erfindung erzielten Vorteile sind insbesondere darin zu sehen, daß der geschmolzene Thermoplastcompound beim Fließen in einem Formgebungwerkzeug trotz der dabei dort auftretenden Scherkräfte nicht homogen durchmischt wird, sondern vielmehr eine zwar verzerrte aber sonst nahezu unversehrte Kern-/Mantel-Struktur aufweist, wobei die Schalen aus hochangereichertem leitfähigen Additiv und der Kern aus möglichst reinem Thermoplast bestehen. Eine derartige Struktur ist in Fig. 2 aufgezeigt (Lichtmikroskopische Durchlichtaufnahme durch den Querschnitt eines Probekörpers aus Polyethylen mit Rußfüllstoff). Die erhaltenen Formkörper weisen eine hohe elektrische Leitfähigkeit auf.

## Patentansprüche

1. Verfahren zum Verformen kleinteiliger Thermoplastteilchen, die an der Außenschicht leitfähige Additive in hochangereicherter Form enthalten, im Inneren aber aus möglichst additivfreiem Thermoplast bestehen unter weitgehender Beibehaltung der inhomogenen Struktur aus additivfreier und additiventhaltender Thermoplastanordnung zu Formteilen mit elektrischen Leitfähigkeiten von mindestens 0,001 S/cm, dadurch gekennzeichnet, daß die Thermoplastteilchen ohne Anwendung von Druck bis zum Schmelzen des Thermoplasten aufgeheizt werden und die resultierende Schmelze mit einer Fließgeschwindigkeit von 5 bis 150 m/Stunde bei niedriger Schergeschwindigkeit unter Druck in einem Formgebungselement bewegt wird.

2. Verfahren nach Anspruch 1, dadurch gekennzeichnet, daß der Druck 50 bis 300 bar und die Schergeschwindigkeit kleiner als 100 sec⁻¹ ist.

3. Verfahren nach Anspruch 1, dadurch gekennzeichnet, daß die Thermoplastteilchen über den Schmelzpunkt des Thermoplasten aufgeheizt werden und in einer Preßform durch freies Fließen zum Formteil verformt werden.

4. Verfahren nach Anspruch 1, dadurch gekennzeichnet, daß aus den Thermoplastteilchen zunächst eine Platte hergestellt wird, die außerhalb des Preßform, über den Schmelzpunkt des Thermoplasten erhitzt wird, und in einer Preßform unter Fließen des Schmelze verpreßt wird, wobei der Thermoplast durch Fließen die Form völlig ausfüllt.

## Claims

1. A process for molding small thermoplastic articles which, on the outside, contain conductive additives in highly concentrated form but on the inside comprise substantially additive-free thermoplastic into moldings having electroconductivities of not less than 0.001 S/cm with substantial retention of the inhomogeneous structure of the additive-free and additive-containing thermoplastic arrangement, which comprises heating up the thermoplastic particles without employment of pressure until the thermoplastic melts and moving the resulting melt under pressure inside a mold element using a flow rate from 5 to 150 m/hour and a low shear rate.

2. A process as claimed in claim 1, wherein the pressure ranges from 50 to 300 bar and the shear rate is less than 100 sec⁻¹.

3. A process as claimed in claim 1, wherein the thermoplastic particles are heated up to above the melting point of the thermoplastic and are molded into a molding by free flow in a compression mold.

4. A process as claimed in claim 1, wherein the thermoplastic particles are first used to produce a sheet which is heated outside the compression mold to above the melting point of the thermoplastic and which is molded in a compression mold by melt flow, the mold being completely filled by the flowing thermoplastic.

## Revendications

1. Procédé pour le moulage de particules en matière thermoplastique finement divisée, la couche extérieure des particules comprenant des additifs conducteurs sous forme fortement concentrée, mais l'intérieur des particules étant constitué de matière thermoplastique autant que possible exempte d'additif, en respectant dans une grande mesure la structure hétérogène de l'agencement des matières thermoplastiques avec et sans additif, en pièces moulées ayant une conductivité électrique d'au moins 0,001 S/cm, caractérisé en ce que les particules en matière thermoplastique sont chauffées jusqu'à la fusion sans application de pression, et que la masse fondue obtenue est introduite dans un moule sous pression, avec une vitesse de coulée de 5 à 150 m/heure, avec une faible vitesse de cisaillement.

2. Procédé selon la revendication 1, caractérisé en ce que la pression est de 50 à 300 bars et la vitesse de cisaillement est inférieure à 100 sec⁻¹.

3. Procédé selon la revendication 1, caractérisé en ce que les particules en matière thermoplastique sont chauffées à une température supérieure au point de fusion de la matière thermoplastique, et qu'elles sont transformées en pièces moulées par coulée libre dans un moule pour moulage par compression.

4. Procédé selon la revendication 1, caractérisé en ce qu'à partir des particules en matière thermoplastique, on prépare d'abord une plaque, qui est chauffée à l'extérieur du moule à une température supérieure au point de fusion de la matière thermoplastique, et qui est soumise à un moulage par compression dans un moule, par coulée de la masse fondue, la matière thermoplastique remplissant complètement le moule par coulée.

ca. 500 µm

+

ca. 5-20 µm

pressen

FIG.1

FIG.2